# EUROPÄISCHE PATENTSCHRIFT

(11) **EP 1 612 253 B1**
(45) Veröffentlichungstag und Bekanntmachung des Hinweises auf die Patenterteilung: **15.10.2008**
(21) Anmeldenummer: 05104985.6
(22) Anmeldetag: 08.06.2005
(51) Int. Cl.: C09J 153/02

(54) **Verwendung eines hitzeaktivierbaren und vernetzbaren Klebebands für die Verklebung von elektronischen Bauteilen und Leiterbahnen**
Use of a heatactivatable and curable adhesive tape for binding electronic components and strip conductors
Utilisation d'une bande adhésive activable par chaleur et réticulable pour coller des composants électroniques et des pistes conductives

(30) Priorität: 28.06.2004 DE 102004031189
(43) Veröffentlichungstag der Anmeldung: 04.01.2006
(73) Patentinhaber: tesa AG, 20253 Hamburg (DE)
(72) Erfinder: Krawinkel, Thorsten, 22457, Hamburg (DE); Ring, Christian, 20259, Hamburg (DE)
(74) Vertreter: Stubbe, Andreas

(56) Entgegenhaltungen:
- EP-A- 1 548 078
- US-A1- 2002 155 286
- US-B1- 6 541 553

## Beschreibung

Die Erfindung betrifft die Verwendung einer hitzeaktivierbaren Klebmasse mit geringem Fließvermögen und ohne flüchtige Substanzen für den Einsatz in elektronischen Bauteilen und Leiterbahnen.

Für die Herstellung elektronischer Bauteile und insbesondere gedruckten Leiterbahnen (FPCB Flexible Printed Circuit Boards) werden heutzutage Klebebänder eingesetzt, an die sehr hohe Ansprüche gestellt werden.

Flexible Printed Circuit Boards werden in einer Vielzahl von elektronischen Geräten wie Handys, Radios, Computern, Druckern und vielen anderen eingesetzt. Sie sind aufgebaut aus Schichten von Kupfer und einem hochschmelzenden widerstandsfähigen Thermoplasten meistens Polyimid, seltener Polyester. Für die Herstellung dieser FPCBs werden besonders leistungsfähige Klebebänder eingesetzt. Zum einen werden zur Herstellung der FPCBs die Kupferfolien mit den Polyimidfolien verklebt, zum anderen werden auch einzelne FPCBs miteinander verklebt, in diesem Fall findet eine Verklebung von Polyimid auf Polyimid statt. Daneben werden die FPCBs auch auf andere Substrate geklebt.

Da bei derartigen Verklebungen sehr hohe Verklebungsleistungen erreicht werden müssen, werden im Allgemeinen hitzeaktivierbare Klebebänder eingesetzt, die bei hohen Temperaturen verarbeitet werden. Diese Klebebänder dürfen während dieser hohen Temperaturbelastung bei der Verklebung der FPCBs, die häufig bei Temperaturen um 200 °C stattfindet, keine flüchtigen Bestandteile abgeben, da diese ansonsten zur Blasenbildung führen können. Um eine hohe Kohäsion zu erreichen, sollten die Klebebänder während dieser Temperaturbelastung vernetzen. Hohe Drücke während des Verklebungsprozesses machen es nötig, dass die Klebebänder bei hohen Temperaturen nur eine geringe Fließfähigkeit besitzen. Dieses wird durch hohe Viskosität des unvernetzten Klebebandes oder durch eine schnelle Vernetzung erreicht. Zudem müssen die Klebebänder noch lötbadbeständig sein, das heißt, für eine kurze Zeit eine Temperaturbelastung von 288 °C überstehen.

Aus diesem Grund ist der Einsatz von reinen Thermoplasten nicht sinnvoll, obwohl diese sehr leicht aufschmelzen, für eine gute Benetzung der zu verklebenden Substrate sorgen und zu einer sehr schnellen Verklebung innerhalb von wenigen Sekunden führen. Andererseits sind diese bei hohen Temperaturen so weich, dass sie bei Verklebung unter Druck zum Herausquellen aus der Klebfuge neigen. Damit ist auch keine Lötbadbeständigkeit gegeben.

Üblicherweise werden für vernetzbare Klebebänder Epoxidharze oder Phenolharze eingesetzt, die mit bestimmten Härtern zu polymeren Netzwerken reagieren. In diesem speziellen Fall sind die Phenolharze nicht einsetzbar, da sie bei der Vernetzung Abspaltprodukte erzeugen, die freigesetzt werden und während der Aushärtung oder spätestens im Lötbad zu einer Blasenbildung führen.

Epoxidharze werden hauptsächlich in der Konstruktionsverklebung eingesetzt und ergeben nach der Aushärtung mit entsprechenden Vernetzern sehr spröde Klebmassen, die zwar hohe Klebfestigkeiten erreichen, aber kaum flexibel sind.

Eine Steigerung der Flexibilität ist für den Einsatz in FPCBs unumgänglich. Zum einen soll die Verklebung mit Hilfe eines Klebebandes geschehen, das idealerweise auf eine Rolle gewickelt ist, zum anderen handelt es sich um flexible Leiterbahnen, die auch gebogen werden müssen, gut zu erkennen am Beispiel der Leiterbahnen in einem Laptop, bei dem der aufklappbare Bildschirm über FPCBs mit den weiteren Schaltungen verbunden ist.

Eine Flexibilisierung dieser Epoxidharzkleber ist auf zwei Arten möglich. Zum einen existieren mit Elastomerketten flexibilisierte Epoxidharze, die aber durch die sehr kurzen Elastomerketten nur eine begrenzte Flexibilisierung erfahren. Die andere Möglichkeit ist, die Flexibilisierung durch die Zugabe von Elastomeren zu erreichen, die der Klebmasse zugegeben werden. Diese Variante hat den Nachteil, dass die Elastomere chemisch nicht vernetzt werden, wodurch nur solche Elastomere zum Einsatz kommen können, die bei hohen Temperaturen immer noch eine hohe Viskosität aufweisen.

Da die Klebebänder meistens aus Lösung hergestellt werden, ist es häufig schwierig Elastomere zu finden, die langkettig genug sind, um bei hohen Temperaturen nicht zu fließen, andererseits aber noch so kurzkettig sind, dass sie in Lösung gebracht werden können.

Eine Herstellung über einen Hotmelt-Prozess ist bei vernetzenden Systemen nur sehr schwierig möglich, da eine frühzeitige Vernetzung während des Herstellprozesses vermieden werden muss.

Der Stand der Technik offenbart des Weiteren in der WO 00/01782 A1 eine elektrisch leitfähige, thermoplastische und hitzeaktivierbare Klebstofffolie, enthaltend
i) ein thermoplastisches Polymer mit einem Anteil von 30 bis 89,9 Gew.-%,
ii) ein oder mehrere klebrigmachende Harze mit einem Anteil von 5 bis 50 Gew.-% und/oder
iii) Epoxydharze mit Härtern, gegebenenfalls auch Beschleunigern, mit einem Anteil von 5 bis 40 Gew.-%,
iv) versilberte Glaskugeln oder Silberpartikel mit einem Anteil von 0,1 bis 40 Gew.-%.

Eine Weiterentwicklung ist aus der DE 198 53 805 A1 bekannt geworden mit der elektrisch leitfähigen, thermoplastischen und hitzeaktivierbaren Klebstofffolie, die enthält
i) ein thermoplastisches Polymer mit einem Anteil von zumindest 30 Gew.-%,
ii) ein oder mehrere klebrigmachende Harze mit einem Anteil von 5 bis 50 Gew.-% und/oder
iii) Epoxydharze mit Härtern, gegebenenfalls auch Beschleunigern, mit einem Anteil von 5 bis 40 Gew.-%,
iv) metallisierte Partikel mit einem Anteil von 0,1 bis 40 Gew.-%,
v) nur schwer oder nicht verformbare Spacerpartikel mit einem Anteil von 1 bis 10 Gew.-%, die bei der Verklebungstemperatur der Klebstofffolie nicht schmelzen.

Nach bevorzugten Ausführungsformen handelt es sich bei den thermoplastischen Polymeren jeweils um thermoplastische Polyolefine, Polyester, Polyurethane oder Polyamide oder modifizierte Kautschuke, wie insbesondere Nitrilkautschuke.

Aufgabe der Erfindung ist es somit, ein Klebeband zur Verklebung von elektronischen Bauteilen und/oder von flexiblen gedruckten Schaltungen bereitzustellen, das hitzeaktivierbar ist, in der Hitze vernetzt, keine flüchtigen Bestandteile enthält, eine geringe Viskosität in der Hitze besitzt, gute Haftung auf Polyimid zeigt und im unvernetzten Zustand löslich in organischen Lösungsmitteln ist.

Gelöst wird diese Aufgabe überraschend durch die Verwendung eines Klebebands, wie sie in dem Hauptanspruch näher gekennzeichnet ist. Gegenstand der Unteransprüche sind vorteilhafte Weiterentwicklungen des Erfindungsgegenstandes.

Demgemäß ist Gegenstand der Erfindung die Verwendung eines hitzeaktivierbaren Klebebands mit einer Klebemasse für die Verklebung von elektronischen Bauteilen und Leiterbahnen, umfassend eine Klebmasse, bestehend mindestens aus einem säure- oder säureanhydridmodifizierten Vinylaromatenblockcopolymer und einem epoxidierten Vinylaromatenblockcopolymer.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge und dergleichen.

Vorteil der Klebemassen ist, dass es keine niedermolekularen Bestandteile gibt, die bei hoher Temperatur flüchtig sind, und während des Verklebens bei 200°C oder später bei der Lötbadbehandlung zu Gasblasen führen, die die Verklebungsleistung negativ beeinflussen. Dadurch, dass zwei Elastomere miteinander vernetzen, ist keine Zugabe von weiteren niedermolekularen Vernetzern oder Härtern wie Epoxidharzen oder Aminen nötig.

Epoxidierte Blockcopolymere werden in US 5,478,885 A und US 5,229,464 A beschrieben. Hierbei handelt es sich nicht um reine Vinylaromatenblockcopolymere. Zwar können in den Endblöcken auch Vinylaromaten eingebaut sein, aber auch in den äußeren Blöcken wird zumindest ein Teil an nicht aromatischen Diolefinen eingebaut. Die beschriebenen Blockcopolymere haben auch nur sehr kurze Blöcke.

Vernetzte Zusammensetzungen aus Epoxidharzen und epoxidmodifizierten Vinylaromatenblockcopolymeren werden in EP 0 658 603 A1 beschrieben. Allerdings werden diese nicht als Klebmassen eingesetzt, zudem findet keine Vernetzung mit einem säureanhydridmodifizierten Vinylaromatenblockcopolymer statt.

Funktionalisierte Elastomere, auch mit Epoxiden funktionalisiert, werden in WO 98/22531 A1 beschrieben. Die funktionalisierten Elastomere enthalten keine Blockcopolymere.

US 6,294,270 B, US 6,423,367 B und US 6,489,042 B beschreiben vernetzbare Mischungen aus epoxidierten Vinylaromatenblockcopolymeren und Epoxidharzen auch für den Gebrauch in elektronischen Bauteilen, unter anderem auch als Klebmasse für die Verklebung zweier elektronischer Bauteile. Hier ist der Einsatz eines weiteren Epoxidharzes zwingend vorgeschrieben, außerdem sind niedermolekulare Härter nötig.

Vernetzbare säureanhydridmodifizierte Blockcopolymere in Klebmassen werden in US 5,369,167 A, JP 57/149369 A1 und JP 58/017160 A1 beschrieben. Allerdings sind immer niedermolekulare Harze zugesetzt, Klebebänder sind nicht erwähnt.

Als Elastomere finden in vorliegender Erfindung bevorzugt solche auf Basis von Blockcopolymeren enthaltend Polymerblöcke überwiegend gebildet von Vinylaromaten (A-Blöcke), bevorzugt Styrol, und solchen überwiegend gebildet durch Polymerisation von 1,3-Dienen (B-Blöcke), bevorzugt Butadien und Isopren Anwendung. Sowohl Homoals auch Copolymerblöcke sind erfindungsgemäß nutzbar. Resultierende Blockcopolymere können gleiche oder unterschiedliche B-Blöcke enthalten, die teilweise, selektiv oder vollständig hydriert sein können. Blockcopolymere können lineare A-B-A Struktur aufweisen. Einsetzbar sind ebenfalls Blockcopolymere von radialer Gestalt sowie sternförmige und lineare Multiblockcopolymere. Als weitere Komponenten können A-B Zweiblockcopolymere vorhanden sein. Sämtliche der vorgenannten Polymere können alleine oder im Gemisch miteinander genutzt werden.
Zumindest ein Teil der eingesetzten Blockcopolymere muss dabei säure- oder säureanhydridmodifiziert sein, wobei die Modifizierung hauptsächlich durch radikalische Pfropfcopolymerisation von ungesättigten Mono- und Polycarbonsäuren oder -säureanhydriden, wie zum Beispiel Fumarsäure, Itaconsäure, Citraconsäure, Acrylsäure, Maleinsäureanhydrid, Itaconsäureanhydrid oder Citraconsäureanhydrid, bevorzugt Maleinsäureanhydrid erfolgt. Bevorzugt liegt der Anteil an Säure beziehungsweise Säureanhydrid zwischen 0,5 und 4 Gewichtsprozenten bezogen auf das gesamte Blockcopolymer.
Kommerziell sind solche Blockcopolymere zum Beispiel unter dem Namen Kraton™ FG 1901 und Kraton™ FG 1924 der Firma Shell, beziehungsweise Tuftec™ M 1913 und Tuftec™ M 1943 der Firma Asahi erhältlich.

Zumindest ein weiteres Blockcopolymer muss epoxidiert vorliegen, wobei die Modifizierung durch oxidative Epoxidierung der Doppelbindungen im Weichblockanteil stattfindet. Bevorzugt liegt das Epoxidäquivalent zwischen 200 und 4000, besonders bevorzugt zwischen 500 und 2500.

Kommerziell sind solche Blockcopolymere zum Beispiel unter dem Namen Epofriend™ A 1005, A 1010 oder A 1020 der Firma Daicel erhältlich.

Neben den schon genannten säure- oder säureanhydridmodifizierten Vinylaromatenblockcopolymeren können auch noch weitere Elastomere zugesetzt werden. Neben nicht modifizierten Blockcopolymeren können unter anderem solche auf Basis reiner Kohlenwasserstoffe eingesetzt werden, zum Beispiel ungesättigte Polydiene, wie natürliches oder synthetisch erzeugtes Polyisopren oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine, um nur einige wenige zu nennen.

Auch Elastomere mit Säure- oder Säureanhydridgruppen wie zum Beispiel Polyvinylmethylether-maleinsäureanhydrid-Copolymere, zum Beispiel zu beziehen unter dem Namen Gantrez™ 119, vertrieben von der Firma ISP, sind einsetzbar.
Gleiches gilt auch für epoxidierte Elastomere.

Um die Adhäsion zu erhöhen, ist auch der Zusatz von mit dem Elastomerblock der Blockcopolymere verträglichen Klebharzen möglich, wobei darauf geachtet werden muss, dass diese Harze nicht flüchtig bei den entsprechenden Vernetzungstemperaturen sind.

Als Klebrigmacher können in den Haftklebemassen zum Beispiel nicht hydrierte, partiell- oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉-oder C₉-Monomerströmen, Polyterpenharze auf Basis von α-Pinen und/oder β-Pinen und/oder δ-Limonen, hydrierte Polymerisate von bevorzugt reinen C₈- und C₉-Aromaten eingesetzt werden. Vorgenannte Klebharze können sowohl allein als auch im Gemisch eingesetzt werden.

Als weitere Additive können typischerweise genutzt werden:
- primäre Antioxidanzien, wie zum Beispiel sterisch gehinderte Phenole
- sekundäre Antioxidanzien, wie zum Beispiel Phosphite oder Thioether
- Prozessstabilisatoren, wie zum Beispiel C-Radikalfänger
- Lichtschutzmittel, wie zum Beispiel UV-Absorber oder sterisch gehinderte Amine
- Verarbeitungshilfsmittel
- Endblockverstärkerharze
- Füllstoffe, wie zum Beispiel Siliziumdioxid, Glas (gemahlen oder in Form von Kugeln), Aluminiumoxide, Zinkoxide, Calciumcarbonate, Titandioxide, Ruße, Metallpulver, etc.
- Farbpigmente und Farbstoffe sowie optische Aufheller

Vorteilhaft an diesen Systemen ist die sehr niedrige Erweichungstemperatur, die sich aus dem Erweichungspunkt des Polystyrols in den Endblöcken der Blockcopolymere ergibt. Da die Elastomere bei der Vernetzungsreaktion in ein polymeres Netzwerk eingebunden werden und diese Reaktion bei den hohen Temperaturen von bis zu 200 °C, die üblicherweise für die Verklebung von FPCBs verwendet werden, relativ schnell ist, kommt es nicht zu Austritten der Klebmasse aus der Klebfuge. Durch die Zugabe von so genannten Beschleunigern kann die Reaktionsgeschwindigkeit weiter erhöht werden.
Beschleuniger können zum Beispiel sein:
- tertiäre Amine, wie Benzyldimethylamin, Dimethylaminomethylphenol, Tris(dimethylaminomethyl)phenol
- Bortrihalogenid-Amin-Komplexe
- substituierte Imidazole
- Triphenylphosphin

Idealerweise werden die säure- beziehungsweise säureanhydridmodifizierten und epoxidierten Elastomere in einem Mengenverhältnis eingesetzt, so dass der molare Anteil an Epoxidgruppen und Anhydridgruppen gerade äquivalent ist. Das Verhältnis zwischen Anhydridgruppen und Epoxidgruppen kann aber in weiten Bereichen variiert werden, dabei sollte für eine ausreichende Vernetzung keine der beiden Gruppen in mehr als einem zehnfachen molaren Überschuss vorliegen.

Zur Herstellung des Klebebandes werden die Bestandteile der Klebmasse in einem geeigneten Lösungsmittel, zum Beispiel Toluol oder Mischungen aus Benzin 60/90 und Aceton, gelöst und auf ein flexibles Substrat, das mit einer Releaseschicht versehen ist, zum Beispiel einem Trennpapier oder einer Trennfolie beschichtet und getrocknet, so dass die Masse von dem Substrat leicht wieder entfernt werden kann. Nach entsprechender Konfektionierung können Stanzlinge, Rollen oder sonstige Formkörper bei Raumtemperatur hergestellt werden. Entsprechende Formkörper werden dann vorzugsweise bei erhöhter Temperatur auf das zu verklebende Substrat, zum Beispiel Polyimid, aufgeklebt.

Es ist auch möglich, die Klebmasse direkt auf einen Polyimidträger zu beschichten. Solche Klebfolien können dann zur Abdeckung von Kupferleiterbahnen für FPCBs eingesetzt werden.

Es ist nicht erforderlich, dass die Verklebung als einstufiges Verfahren erfolgt, sondern auf eines der beiden Substrate kann zunächst das Klebeband geheftet werden, indem man in der Wärme laminiert. Beim eigentlichen Heißklebeprozess mit dem zweiten Substrat (zweite Polyimidfolie oder Kupferfolie) härtet das Harz dann ganz oder teilweise aus, und die Klebstofffuge erreicht die hohe Verklebungsfestigkeit.
Die Epoxidgruppen sollten vorzugsweise bei der Laminiertemperatur noch keine chemische Reaktion eingehen, sondern erst bei der Heißverklebung mit den Säure- oder Säureanhydridgruppen reagieren.

Für spezielle Anwendungen können die Klebebänder auch elektrisch leitend eingestellt werden, nach Methoden wie diese zum Beispiel in US 3,475,213 A, US 4,113,981 A, 4,606,962 A, US 5,300,340 A, WO 00/01782 A1 oder DE 198 53 805 A1 beschrieben sind.

### Beispiele

Im Folgenden wird die Erfindung durch einige Beispiele näher beschrieben, ohne dabei die Erfindung in irgendeiner Weise zu beschränken.

### Beispiel 1

Eine Mischung aus 85 Gew.-% Kraton™ FG 1901 (maleinsäureanhydridmodifiziertes Styrol-Ethylenbutylen-Styrol-Blockcopolymer mit 30 Gew.-% Blockpolystyrol und ca. 2 Gew.-% Maleinsäureanhydrid) und 15 Gew.-% Epofriend™ A 1010 (epoxidiertes Styrol-Butadien-Styrol-Blockcopolymer mit 40 Gew.-% Blockpolystyrol) werden in Toluol gelöst und aus Lösung auf ein mit 1,5 g/m² silikonisiertes Trennpapier beschichtet und bei 110 °C für 15 min getrocknet. Die Dicke der Klebeschicht beträgt 25 µm.

### Vergleichsbeispiel 2

Eine Mischung aus 80 Gew.-% Kraton™ G 1650 (nicht modifiziertes Styrol-Ethylenbutylen-Styrol-Blockcopolymer analog Kraton™ FG 1901), 15 Gew.-% Epofriend™ A 1010 (epoxidiertes Styrol-Butadien-Styrol-Blockcopolymer mit 40 Gew.-% Blockpolystyrol) und 5 Gew.-% Maleinsäureanhydrid werden in Toluol gelöst und aus Lösung auf ein mit 1,5 g/m² silikonisiertes Trennpapier beschichtet und bei 110 °C für 15 min getrocknet. Die Dicke der Klebeschicht beträgt 25 µm.

### Vergleichsbeispiel 3

Eine Mischung aus 85 Gew.-% Kraton™ FG 1901 (maleinsäureanhydridmodifiziertes Styrol-Ethylenbutylen-Styrol-Blockcopolymer mit 30 Gew.-% Blockpolystyrol und ca. 2 Gew.-% Maleinsäureanhydrid) und 12 Gew.-% Kraton™ D 1102 (Styrol-Butadien-Styrol-Blockcopolymer mit 30 Gew.-% Blockpolystyrol) und 3 Gew.-% Bakelite EPR™ 161 (Epoxidharz) werden in Toluol gelöst und aus Lösung auf ein mit 1,5 g/m² silikonisiertes Trennpapier beschichtet und bei 110 °C für 15 min getrocknet. Die Dicke der Klebeschicht beträgt ebenfalls 25 µm.

### Verklebung von FPCBs mit dem hergestellten Klebeband

Zwei FPCBs wurden jeweils mit den nach den Beispielen 1 bis 3 hergestellten Klebebändern verklebt. Dazu wurde das Klebeband auf die Polyimidfolie des FPCB-Laminats aus Polyimid/Kupferfolie bei 100 °C auflaminiert. Anschließend wurde eine zweite Polyimidfolie eines weiteren FPCBs auf das Klebeband geklebt und der ganze Verbund in einer beheizbaren Bürklepresse bei 200 °C bei einem Druck von 1,3 MPa für eine Stunde verpresst.

### Prüfmethoden

Die Eigenschaften der nach den oben genannten Beispielen hergestellten Klebstofffolien wurden mit folgenden Testmethoden untersucht.

### T-Peel Test mit FPCB

Mit einer Zugprüfmaschine der Firma Zwick wurden die nach dem oben beschriebenen Verfahren hergestellten Verbunde aus FPCB/Klebeband/FPCB im 180° Winkel mit einer Geschwindigkeit von 50 mm/min auseinander gezogen und die benötigte Kraft in N/cm gemessen. Die Messungen wurden bei 20 °C und 50 % rel. Feuchte durchgeführt. Jeder Messwert wurde dreifach bestimmt.

### Temperaturbeständigkeit

Analog zum beschriebenen T-Peel Test wurden die nach dem oben beschriebenen Verfahren hergestellten FPCB-Verbunde so aufgehängt, dass die eine Seite des Verbundes aufgehängt wurde, an der anderen Seite wurde ein Gewicht von 500 g befestigt. Der statische Schältest findet bei 70 °C statt. Gemessen wird der statische Schälweg in mm/h.

### Lötbadbeständigkeit

Die nach dem oben beschriebenen Verfahren verklebten FPCB-Verbunde wurden für 10 Sekunden auf ein 288 °C heißes Lötbad gelegt. Die Verklebung wurde als lötbadbeständig gewertet, wenn sich keine Luftblasen bildeten, welche die Polyimidfolie des FPCBs aufblähen ließen. Der Test wurde als nicht bestanden gewertet, wenn bereits eine leichte Blasenbildung eintrat.

### Ergebnisse:

Zur klebtechnischen Beurteilung der oben genanten Beispiele wurde zunächst der T-Peel Test durchgeführt.

Die Ergebnisse sind Tabelle 1 zu entnehmen.

**Tabelle 1**

| | T-Peel Test [N/cm] |
|---|---|
| Beispiel 1 | 11,4 |
| Beispiel 2 | 3,5 |
| Beispiel 3 | 7,2 |

Wie zu erkennen ist, konnte in dem Beispiel 1 eine sehr viel höhere Klebleistung erzielt werden, als in den beiden Vergleichsbeispielen, bei denen nur ein Teil der Elastomere vernetzt wird.

Die Temperaturbeständigkeit der Klebebänder wurde mit dem statischen Peel-Test gemessen, dessen Werte in Tabelle 2 zu finden sind.

**Tabelle 2**

| | Statischer T-Peel Test bei 70 °C [mm/h] |
|---|---|
| Beispiel 1 | 13 |
| Beispiel 2 | 32 |
| Beispiel 3 | 15 |

Die Temperaturbeständigkeit der Beispiele 1 und 3 ist sehr ähnlich, während bei dem zweiten Beispiel mit einer großen Menge an nicht vernetzendem Elastomer die Temperaturbeständigkeit deutlich sinkt.

Der Lötbadtest wurde von allen 3 Beispielen bestanden.

## Patentansprüche

1. Verwendung eines hitzeaktivierbaren Klebebands zur Verklebung von elektronischen Bauteilen und/oder von flexiblen gedruckten Schaltungen mit einer Klebemasse, wobei die Klebemasse zumindest aus
a) einem säure- oder säureanhydridmodifizierten Vinylaromatenblockcopolymer und
b) einem epoxidierten Vinylaromatenblockcopolymer
besteht.

2. Verwendung nach Anspruch 1, **dadurch gekennzeichnet, dass** es sich bei den Vinylaromatenblockcopolymeren um Styrolblockcopolymere handelt.

3. Verwendung nach Anspruch 1 oder 2, **dadurch gekennzeichnet, dass** zumindest eines der Blockcopolymere im Weichblock hydriert ist.

4. Verwendung nach zumindest einem der Ansprüche 1 bis 3, **dadurch gekennzeichnet, dass** die Klebemasse klebrigmachende Harze, Beschleuniger, Farbstoffe, Ruß und/oder Metallpulver enthält.

5. Verwendung nach zumindest einem der vorigen Ansprüche, **dadurch gekennzeichnet, dass** die Klebmasse bei Temperaturen über 150 °C vernetzt.

6. Verwendung nach zumindest einem der vorigen Ansprüche, **dadurch gekennzeichnet, dass** die Klebmasse weitere Elastomere wie solche auf Basis reiner Kohlenwasserstoffe, chemisch im wesentlichen gesättigte Elastomere sowie chemisch funktionalisierte Kohlenwasserstoffe enthält.

7. Verwendung nach zumindest einem der vorigen Ansprüche zur Verklebung auf Polyimid.

## Claims

1. Use of a heat-activable adhesive tape for bonding electronic components and/or flexible printed circuits with an adhesive, the adhesive being composed at least of
a) an acid-modified or acid-anhydride-modified vinylaromatic block copolymer and
b) an epoxidized vinylaromatic block copolymer.

2. Use according to Claim 1, **characterized in that** the vinylaromatic block copolymers are styrene block copolymers.

3. Use according to Claim 1 or 2, **characterized in that** at least one of the block copolymers is hydrated in the soft block.

4. Use according to at least one of Claims 1 to 3, **characterized in that** the adhesive comprises tackifying resins, accelerators, dyes, carbon black and/or metal powders.

5. Use according to at least one of the preceding claims, **characterized in that** the adhesive crosslinks at temperatures above 150°C.

6. Use according to at least one of the preceding claims, **characterized in that** the adhesive comprises further elastomers such as those based on pure hydrocarbons, elastomers which are essentially saturated chemically and also chemically functionalized hydrocarbons.

7. Use according to at least one of the preceding claims for bonding to polyimide.

## Revendications

1. Utilisation d'un ruban adhésif activable à la chaleur, pour le collage de composants électroniques et/ou de circuits imprimés souples avec une matière adhésive, la matière adhésive étant constituée au moins
a) d'un copolymère séquencé à base vinylaromatique, modifié par un acide ou un anhydride d'acide et
b) d'un copolymère séquencé à base vinylaromatique, époxydé.

2. Utilisation selon la revendication 1, **caractérisée en ce que** les copolymères séquencés à base vinylaromatique consistent en des copolymères séquencés à base de styrène.

3. Utilisation selon la revendication 1 ou 2, **caractérisée en ce qu'**au moins l'un des copolymères séquencés est hydrogéné dans la séquence souple.

4. Utilisation selon au moins l'une des revendications 1 à 3, **caractérisée en ce que** la matière adhésive contient des résines conférant l'adhésivité, des accélérateurs, des colorants, du noir de carbone et/ou une poudre métallique.

5. Utilisation selon au moins l'une des revendications précédentes, **caractérisée en ce que** la matière adhésive est réticulée à des températures de plus de 150 °C.

6. Utilisation selon au moins l'une des revendications précédentes, **caractérisée en ce que** la matière adhésive contient d'autres élastomères tels que ceux à base d'hydrocarbures purs, d'élastomères essentiellement saturés chimiquement ainsi que d'hydrocarbures fonctionnalisés chimiquement.

7. Utilisation selon au moins l'une des revendications précédentes pour le collage sur polyimide.
